# EUROPEAN PATENT SPECIFICATION

(11) **EP 3 710 914 B1**
(45) Date of publication and mention of the grant of the patent: **27.03.2024**
(21) Application number: 18789617.0
(22) Date of filing: 18.10.2018
(51) Int. Cl.: G06F 3/01, F24C 7/08

(54) **A HOUSEHOLD APPLIANCE**
EIN HAUSHALTSGERÄT
UN APPAREIL MÉNAGER

(30) Priority: 16.11.2017 TR 201718140
(43) Date of publication of application: 23.09.2020
(73) Proprietor: Arçelik Anonim Sirketi, 34445 Istanbul (TR)
(72) Inventor: SOZEN, Ahmet, 34950 Istanbul (TR); HATIPOGLU, Oner, 34950 Istanbul (TR); TEZEL, Yagiz, 34950 Istanbul (TR); SUTCUOGLU, Mehmet, 34950 Istanbul (TR)
(86) International application number: PCT/EP2018/078570
(87) International publication number: WO 2019/096534

(56) References cited:
- WO-A1-2017/026962
- WO-A2-2010/135478
- DE-A1- 10 361 341
- DE-A1-102013 107 369

## Description

### Technical Field

The present invention relates to a household appliance controlled by means of a virtual interface reflected on a surface.

### Prior Art

With the recent advances in technology, what was imagined as science-fiction in the past are becoming a part of our daily lives. One of the best examples of this is virtual interfaces controlled by means of gestures. Virtual interfaces enable providing users control panels with various configuration without requiring a physical input component. A user can thus place and arrange said interface according to his/her intentions. Virtual interfaces basically comprise a projector enabling forming an interface image, and a sensor enabling detecting motions within the area of said image.

In systems with virtual interfaces, a structure is required to enable identifying the users for being able to prevent unauthorized users from using the system, and to provide different users with interfaces according to their preferences.

State of the art international patent application no. WO2010/135478 mentions a control system comprising a projector and a camera. Patent application DE 103 61 341 A1 mentions a household appliance having an accessory to be used for gesture recognition.

None of the state of the art documents include a solution such as the one in the present invention.

### Brief Description of the Invention

The aim of the present invention is to realize a household appliance controlled by means of a virtual interface reflected on a surface.

Another aim of the present invention is to realize a household appliance capable of identifying a user.

A further aim of the present invention is to realize a household appliance capable of providing separate interfaces to different users.

### Detailed Description of the Invention

The household appliance realized to achieve the aims of the present invention is illustrated in the accompanying drawings, wherein:

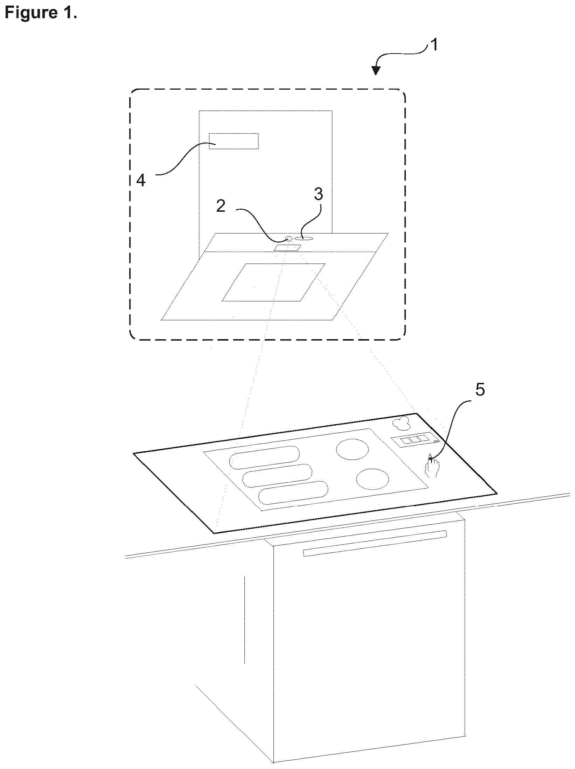

Figure 1: is a view of an embodiment of the household appliance.

The elements in the figures are numbered individually and the correspondence of these numbers are given hereinafter.
1. Household appliance
2. Projector
3. Sensor
4. Control unit
5. Accessory

In its most basic form, the household appliance (1) comprising at least one accessory (5) is defined by appended claim 1.

The household appliance (1) of the invention comprises at least one projector (2) for reflecting on a surface one or more images representative of one or more control interfaces enabling controlling one or more appliances. The image reflected by the projector (2) may be an image representing the elements including, but not limited to, the controlling elements such as push buttons, switches, adjusting rods, rotary switch, and the like. The projector (2) can also reflect an image representing a component enabling informing a user, including components such as a gauge, display or a lamp. The sensor (3) enables detection of the motions which may be performed on the images reflected by the projector (2), and the objects present on the surface on which said image is reflected. Thus, a user pushing a button, sliding an adjustment rod or rotating an adjustment member on a representative interface, can be detected. The control unit (4) receives data detected by the sensor (3) and processes said data. The nature of the motions of a user on an image reflected by the projector (2) can thus be determined.

At least one accessory (5) is used to identify the users controlling the household appliance (1) of the invention. In this embodiment, at least one of the physical features of the accessory (5) such as shape, size, color, pattern or texture is predetermined. At least one accessory (5) is provided having at least one characteristic physical feature for each one of the users. The user inserts at least one accessory (5) into the region detected by the sensor (3). The control unit (4) identifies the characteristic physical features of said accessory (5) by processing the image provided by the sensor (3), and determines to which user said accessory belongs to, thereby identifying the user presently controlling the household appliance (1). Thus, it is enabled not to receive commands from a user not bearing an accessory (5), and the users bearing different accessories (5) are enabled to have different authorities.

In an embodiment of the invention, the household appliance (1) comprises different parameters for different users. For example, if a child user uses a household appliance (1) which is a cooking range, then the maximum operational output of said cooking range may be restricted or the cooking range may be prevented from operating longer than a given duration.

In an embodiment of the invention, the control unit (4) is able to identify by processing the image provided by the sensor (3), with which hand the user bears the accessory (5) and controls the projector (2) in accordance with this information, enabling the control interface to be reflected on a position facilitating control with said hand.

The accessory (5) may be any accessory, such as, but not limited to, a ring, bracelet, wristband or a label which a user can bear on any part of his/her body such as fingers, palm, back of the hand, wrist or arm.

In the household appliance (1) of the invention, each user is enabled to place his/her interface how he/she desires. The control unit (4) saves the preferences of each user in its memory unit. When the control unit (4) later identifies an accessory (5) paired with a user, it configures the projector (2) to reflect a related interface.

The household appliance (1) of the invention can connect to separate appliances via a wired or wireless communication interface, thereby enabling the user to control said appliances by means of the virtual interface provided by the household appliance (1). The household appliance (1) of the invention enables generating separate control interfaces for separate appliances or appliance combinations desired to be controlled.

## Claims

1. A household appliance (1) comprising at least one accessory (5) the household appliance (1) controlled by means of a virtual interface reflected on a surface, **comprising**
- at least one projector (2) for reflecting on a surface one or more images representative of one or more control interfaces enabling controlling one or more appliances,
- at least one sensor (3) configured to enable detection of the image or the images reflected at least by the projector (2), the motions which may be performed on said images, and the objects present on the surface on which said image is reflected, and
- at least one control unit (4) configured to form an image to be reflected by the projector (2), to receive data from the sensor (3), to process said received data, and to control said projector (2) and one or more appliances according to said processed data, **characterized by**
- the control unit (4) configured to detect at least one of the physical features shape, size, color, pattern or texture, to identify by processing the image provided by the sensor (3), the characteristic physical features of said accessory (5), and to determine to which user said accessory belongs to, thereby identifying the user presently controlling the household appliance (1)
- the control unit (4) configured to save the preferences of each user in a memory unit, and to configure the projector (2) to reflect a related interface upon identifying an accessory (5) paired with a user.

2. A household appliance (1) according to claim 1, **comprising** a control unit (4) configured to identify by processing the image provided by the sensor (3), with which hand a user bears the accessory (5), and to enable the control interface to be reflected on a position facilitating control with said hand by controlling the projector (2) in accordance with this information.

3. A household appliance (1) according to claim 1, **characterized by** being suitable to be used with any accessory, such as a ring, bracelet, wristband or a label which a user can bear on any part of his/her body such as fingers, palm, back of the hand, wrist or arm.

4. A household appliance (1) according to any one of the preceding claims, **characterized by** being capable of connecting to separate appliances via a wired or wireless communication interface, thereby enabling a user to control said appliances by means of the virtual interface provided by the household appliance (1).

5. A household appliance (1) according to claim 4, **comprising** a control unit (4) configured to enable generating separate control interfaces for separate appliances or appliance combinations desired to be controlled.

## Patentansprüche

1. Ein Haushaltsgerät (1) **umfasst** mindestens ein Zubehörteil (5), das das Haushaltsgerät (1) mittels einer auf einer Oberfläche reflektierten virtuellen Schnittstelle steuert, umfassend
- mindestens einen Projektor (2) zum Reflektieren eines oder mehrerer Bilder auf einer Oberfläche, die für eine oder mehrere Steuerschnittstellen repräsentativ sind und die Steuerung eines oder mehrerer Geräte ermöglichen,
- mindestens einen Sensor (3), der so konfiguriert ist, dass er die Erkennung des Bildes oder der Bilder ermöglicht, die zumindest vom Projektor (2) reflektiert werden, der Bewegungen, die auf den Bildern ausgeführt werden können, und der Objekte, die sich auf der Oberfläche befinden, auf der das Bild reflektiert wird, und
- mindestens eine Steuereinheit (4), die dazu konfiguriert ist, ein vom Projektor (2) zu reflektierendes Bild zu erzeugen, Daten vom Sensor (3) zu empfangen, die empfangenen Daten zu verarbeiten und den Projektor (2) zu steuern, und ein oder mehrere Geräte gemäß den verarbeiteten Daten, **die gekennzeichnet sind durch**
- die Steuereinheit (4), die so konfiguriert ist, dass sie mindestens eines der physikalischen Merkmale Form, Größe, Farbe, Muster oder Textur erkennt, um durch Verarbeitung des vom Sensor (3) bereitgestellten Bildes die charakteristischen physikalischen Merkmale des Zubehörs (5) zu identifizieren und zu bestimmen, zu welchem Benutzer das Zubehör gehört, um so den Benutzer zu identifizieren, der derzeit das Haushaltsgerät (1) steuert,
- die Steuereinheit (4), die so konfiguriert ist, dass sie die Präferenzen jedes Benutzers in einer Speichereinheit speichert und den Projektor (2) so konfiguriert, dass er eine entsprechende Schnittstelle widerspiegelt, wenn ein mit einem Benutzer gekoppeltes Zubehörteil (5) identifiziert wird.

2. Ein Haushaltsgerät (1), wie in Anspruch 1 aufgeführt, umfasst eine Steuereinheit (4), die so konfiguriert ist, dass sie durch Verarbeitung des vom Sensor (3) gelieferten Bildes identifiziert, mit welcher Hand ein Benutzer das Zubehör (5) trägt, und dass sie es ermöglicht, die Steuerschnittstelle auf eine Position zu reflektieren, die die Steuerung mit der genannten Hand erleichtert, indem sie den Projektor (2) entsprechend dieser Information steuert.

3. Ein Haushaltsgerät (1), wie in Anspruch 1 aufgeführt, **ist dadurch gekennzeichnet, dass** sie mit einem beliebigen Accessoire wie einem Ring, einem Armband, einem Armreif oder einem Etikett verwendet werden kann, dass der Benutzer an einer beliebigen Stelle seines Körpers wie den Fingern, der Handfläche, dem Handrücken, dem Handgelenk oder dem Arm tragen kann.

4. Ein Haushaltsgerät (1), wie in einem der vorherigen Ansprüchen aufgeführt, **ist dadurch gekennzeichnet, dass** sie in der Lage ist, über eine drahtgebundene oder drahtlose Kommunikationsschnittstelle eine Verbindung zu separaten Geräten herzustellen, wodurch es einem Benutzer ermöglicht wird, diese Geräte über die von dem Haushaltsgerät (1) bereitgestellte virtuelle Schnittstelle zu steuern.

5. Ein Haushaltsgerät (1), wie in Anspruch 4 aufgeführt, umfasst eine Steuereinheit (4), die so konfiguriert ist, dass sie die Erzeugung separater Steuerschnittstellen für separate Geräte oder Gerätekombinationen, die gesteuert werden sollen, ermöglicht.

## Revendications

1. Appareil ménager (1) comprenant au moins un accessoire (5), l'appareil ménager (1) étant contrôlé au moyen d'une interface virtuelle reflétée sur une surface, **comprenant**
- au moins un projecteur (2) pour réfléchir sur une surface une ou plusieurs images représentatives d'une ou plusieurs interfaces de commande permettant de contrôler un ou plusieurs appareils,
- au moins un capteur (3) configuré pour permettre la détection de l'image ou des images réfléchies au moins par le projecteur (2), des mouvements qui peuvent être effectués sur lesdites images, et des objets présents sur la surface sur laquelle ladite image est réfléchie, et
- au moins une unité de commande (4) configurée pour former une image devant être réfléchie par le projecteur (2), pour recevoir des données du capteur (3), pour traiter lesdites données reçues et pour commander ledit projecteur (2) et un ou plusieurs appareils en fonction desdites données traitées, **caractérisée par**
- l'unité de commande (4) configurée pour détecter au moins l'une des caractéristiques physiques - forme, taille, couleur, motif ou texture -, pour identifier, par traitement de l'image fournie par le capteur (3), les caractéristiques physiques dudit accessoire (5), et pour déterminer à quel utilisateur appartient ledit accessoire, identifiant ainsi l'utilisateur qui commande actuellement l'appareil ménager (1)
- l'unité de contrôle (4) est configurée pour enregistrer les préférences de chaque utilisateur dans une unité de mémoire et pour configurer le projecteur (2) de manière à ce qu'il affiche une interface connexe lors de l'identification d'un accessoire (5) associé à un utilisateur.

2. Appareil ménager (1) selon la déclaration 1, **comprenant** une unité de commande (4) configurée pour identifier par traitement de l'image fournie par le capteur (3), avec quelle main un utilisateur porte l'accessoire (5), et pour permettre de réfléchir l'interface de commande sur une position facilitant le contrôle avec ladite main en commandant le projecteur (2) en fonction de cette information.

3. Appareil ménager (1) selon la déclaration 1, **caractérisé par le fait qu'**il peut être utilisé avec n'importe quel accessoire, tel qu'une bague, un bracelet ou une étiquette qu'un utilisateur peut porter sur n'importe quelle partie de son corps telle que les doigts, la paume, le dos de la main, le poignet ou le bras.

4. Appareil ménager (1) selon l'une quelconque des déclarations précédentes, **caractérisé en ce qu'**il est capable de se connecter à des appareils distincts via une interface de communication câblée ou sans fil, permettant ainsi à un utilisateur de contrôler lesdits appareils au moyen de l'interface virtuelle fournie par l'appareil ménager (1).

5. Appareil ménager (1) selon la déclaration 4, **comprenant** une unité de commande (4) configurée pour permettre la génération d'interfaces de commande distinctes pour des appareils ou des combinaisons d'appareils distincts que l'on souhaite commander.
